# FASCICULE DE BREVET EUROPEEN

(11) **EP 2 895 692 B1**
(45) Date de publication et mention de la délivrance du brevet: **06.07.2016**
(21) Numéro de dépôt: 13773290.5
(22) Date de dépôt: 12.09.2013
(51) Int. Cl.: F01D 5/08, F01D 5/18

(54) **AUBE REFROIDIE DE TURBINE HAUTE PRESSION**
GEKÜHLTE SCHAUFEL EINER HOCHDRUCKTURBINE
COOLED VANE OF A HIGH-PRESSURE TURBINE

(30) Priorité: 13.09.2012 FR 1258626
(43) Date de publication de la demande: 22.07.2015
(73) Titulaire: SNECMA, 75015 Paris (FR)
(72) Inventeur: Botrel, Erwan Daniel, F-77550 Moissy-Cramayel cedex (FR); Dujol, Charlotte, Marie, F-77550 Moissy-Cramayel cedex (FR)
(74) Mandataire: Gevers & Orès
(86) Numéro de dépôt international: PCT/FR2013/052102
(87) Numéro de publication internationale: WO 2014/041311

(56) Documents cités:
- EP-A1- 1 832 712
- EP-A2- 1 923 537
- WO-A1-2010/046584
- DE-A1-102004 037 444
- DE-U1-202011 109 225
- US-A1- 2004 151 580

## Description

### Domaine technique

La présente invention concerne le domaine des turbomachines et vise une aube de turbine refroidie par le moyen d'un fluide de refroidissement, à circulation interne d'un fluide de refroidissement.

### Etat de la technique

Une turbomachine est une machine tournante dans laquelle s'opère un transfert d'énergie entre l'écoulement d'un fluide et un système aubagé solidaire d'un rotor, par exemple un compresseur ou une turbine faisant partie d'un turbomoteur tel qu'un moteur à turbine à gaz. Un turbomoteur à turbine à gaz pour aéronef, tel qu'un turboréacteur multi-flux, comprend généralement, d'amont en aval dans le sens de l'écoulement des gaz, une soufflante, un ou plusieurs étages de compresseurs, par exemple un compresseur à basse pression et un compresseur à haute pression, une chambre de combustion, un ou plusieurs étages de turbines, par exemple une turbine à haute pression et une turbine à basse pression, et une tuyère d'échappement des gaz. A chaque compresseur peut correspondre une turbine, les deux étant reliés par un arbre, formant ainsi, par exemple, un rotor haute pression et un rotor basse pression.

La turbine du rotor haute pression est disposée immédiatement en aval de la chambre de combustion et est alimentée par le flux gazeux issu de la chambre. La température des gaz est aussi élevée que peut le supporter le matériau constituant la turbine car le rendement thermodynamique du moteur et la consommation spécifique qui lui est liée en dépendent.

Pour leur permettre de supporter des conditions de fonctionnement extrêmes, les aubes de la turbine haute pression sont fabriquées dans des alliages résistants à haute température et sont pourvues de moyens de refroidissement internes. En particulier, les aubes mobiles de turbine haute pression de moteur à turbine à gaz sont pourvues de cavités internes dans lesquelles circulent un fluide de refroidissement. Le fluide de refroidissement est constitué d'air prélevé au niveau du compresseur haute pression.

Les aubes comprennent globalement trois parties : une pale de forme aérodynamique, un pied par lequel l'aube est fixée au disque du rotor en étant logé dans des alvéoles usinés sur la jante du disque et une plateforme entre la pale et l'aube assurant la continuité de la veine. Selon une technique de refroidissement, l'air est guidé le long ou à travers le disque jusqu'au fond des alvéoles de ce dernier d'où il est injecté dans les aubes à travers des ouvertures ménagées dans la base du pied de celles-ci. L'air est distribué par ces ouvertures dans des canaux qui traversent le pied et qui communiquent avec les cavités internes de la pale. L'air circule dans ces cavités le long de la face interne des parois de la pale puis est évacué dans la veine du flux moteur par des perçages répartis en particulier le long des bords de la pale. Tel que cela est décrit dans le document WO 2010/046584 au nom du présent déposant, les ouvertures sont pratiquées sur la face du pied de l'aube qui est en vis-à-vis du fond de l'alvéole du disque dans lequel le pied est logé. On désigne par la suite, base, cette face du pied de l'aube. Sa forme est rectangulaire. Les ouvertures de chacun des canaux sont alignées longitudinalement sur cette base, entre le bord amont et le bord aval.

Le débit de refroidissement injecté dans les aubes mobiles résulte d'un compromis entre l'exigence du meilleur refroidissement possible et la maîtrise de la consommation spécifique du moteur. Une plaquette percée, dite plaquette de calibrage, est fixée dans ce but sur la base du pied d'aube afin de calibrer le débit d'air injecté dans chaque cavité du circuit de refroidissement et assurer ainsi des niveaux thermiques compatibles avec les exigences de durée de vie de la pièce. Des solutions avec plaquettes de calibrages sont décrites dans les brevets EP 1.832.712, DE 102004 03744 et DE 20 2011 109225.

La répartition du débit est aussi optimisée pour garantir un taux de surpression minimal - rapport entre les pressions dans la veine et dans les cavités internes - au niveau des perçages et ainsi éviter toute réintroduction d'air chaud de la veine dans l'aube.

Pour assurer le contrôle du débit d'air de refroidissement, il suffit d'ajuster la dimension des perçages de la plaquette de calibrage en fonction des retours d'essais, sans avoir à modifier le modèle usiné de l'aube.

La plaquette de calibrage est selon l'art antérieur brasée sur le pied d'aube, l'étanchéité entre les différents canaux du circuit étant assurée par un feuillard de brasure qui reprend la forme de la plaquette. Ce mode de liaison par brasage est bien maîtrisé mais nécessite des opérations onéreuses liées au passage au four qu'il serait souhaitable de réduire. En outre, si les orifices de calibrage sont de très faible diamètre, des opérations supplémentaires doivent être prévues pour éviter l'obturation de ces derniers par des coulures de brasure.

L'invention se rapporte ainsi à la fixation de cette plaquette de calibrage à la base du pied de l'aube de manière optimale en termes d'efficacité de l'étanchéité et de coût de fabrication.

Pour éviter l'opération de brasage, il a été proposé de fixer la plaquette de calibrage sur le pied d'aube par le biais d'une soudure autogène à clin, en particulier au moyen d'un faisceau laser. Cette méthode de soudage consiste à lier la plaquette en périphérie sans apport de matière en appliquant le faisceau laser le long de la zone de contact avec l'aube. Une soudure par transparence est effectuée dans les zones de séparation situées entre les ouvertures d'alimentation des canaux de refroidissement pour former des joints d'étanchéité séparant les ouvertures entre elles.

Cependant, on constate que le soudage par transparence est susceptible d'entraîner l'apparition de criques dans le pied de l'aube. Ces criques peuvent se propager et endommager la pièce.

Supprimer cette soudure dans les zones de séparation permettrait de résoudre le problème lié au risque de formation de criques. Cette solution cependant induirait la suppression des joints d'étanchéité et le risque d'entrainer des fuites d'air calibré entre les différentes cavités du circuit de refroidissement. Il s'ensuivrait alors une nouvelle répartition du débit de l'air de refroidissement dans l'aube. Le comportement thermique de l'aube ainsi que les taux de surpression seraient modifiés remettant en question :
- la durée de vie certifiée ; la répartition du comportement thermique de la pale,
- l'intégrité de l'aube ; le taux de surpression minimal entraînant un risque de brûlure,
- le rendement certifié de la turbine haute pression entraînant une augmentation du débit de refroidissement de l'aube.

### Exposé de l'invention

L'invention a pour objectif un moyen de liaison de la plaquette de calibrage au pied de l'aube, ce moyen assurant l'étanchéité entre les différents canaux pour l'air calibré, c'est-à-dire l'air qui a passé les perçages calibrés de la plaquette de calibrage. Ce moyen de fixation doit être avantageux en termes de coût et ne pas présenter de risque de formation de criques sur la pièce.

On parvient à cet objectif avec une aube mobile de turbomachine comportant une pale avec des cavités internes de refroidissement et un pied par lequel l'aube peut être montée sur un disque de rotor, le pied comprenant au moins deux canaux communiquant avec lesdites cavités internes et débouchant à travers la base du pied, ladite base comprenant au moins deux ouvertures dans lesquelles débouchent les canaux, une plaquette de calibrage pourvue de perçages calibrés correspondant auxdites ouvertures étant fixée sur la base du pied. Cette aube mobile est caractérisée par le fait qu'un moyen mécanique formant barrière d'étanchéité entre les deux ouvertures est ménagé entre la plaquette et la base du pied de l'aube.

Par moyen mécanique d'étanchéité, on comprend un moyen qui empêche la circulation de l'air calibré d'une ouverture à l'autre, ce moyen ne mettant pas en oeuvre de techniques de soudage ou brasage entre la plaquette et le pied de l'aube dans les zones de séparation entre les ouvertures.

Plus particulièrement, le moyen mécanique formant barrière d'étanchéité comprend un tenon ménagé sur la plaquette ou la base du pied et une mortaise ménagée en vis-à-vis du tenon sur la base ou la plaquette, le tenon étant emboîté dans la mortaise.

De préférence, le tenon est ménagé sur la plaquette et la mortaise sur le pied de l'aube.

Avantageusement, au moins une face du tenon est en contact avec une paroi de la mortaise de manière à empêcher tout passage du gaz entre le tenon et la mortaise.

Le tenon peut avoir différentes formes, par exemple être à section trapézoïdale ou bien à section de forme arrondie.

La plaquette peut être fixée également par un moyen d'accrochage mécanique mais de préférence, elle est fixée au pied de l'aube par soudure autogène, notamment au laser. Plus particulièrement, la soudure est à clin, la liaison étant réalisée sur le pourtour de la plaquette.

L'aube comprend généralement entre deux et six ouvertures sur la base, des moyens mécaniques d'étanchéité étant ménagés dans les zones de séparation entre les ouvertures.

### Brève description des figures

L'invention sera mieux comprise, et d'autres buts, détails, caractéristiques et avantages de celle-ci apparaîtront plus clairement avec la description explicative détaillée qui suit, d'un mode de réalisation de l'invention donné à titre d'exemple purement illustratif et non limitatif, en référence aux dessins schématiques annexés.

Sur ces dessins :
- la figure 1 représente en perspective et en vue éclatée une aube mobile de turbine, la plaquette de calibrage et le disque de turbine partiellement ;
- la figure 2 montre, vus de dessous, le pied d'aube et la plaquette de calibrage fixée sur la base du pied ;
- la figure 3 montre en coupe la disposition de la plaquette sur la face interne du pied de l'aube selon l'art antérieur et liée par brasage ;
- la figure 4 montre en coupe la disposition de la plaquette sur la face interne du pied d'aube selon un mode de réalisation sans étanchéité entre les orifices adjacents et non conforme à l'invention ;
- la figure 5 montre en coupe la disposition de la plaquette sur la face interne du pied d'aube, selon l'invention.

### Description détaillée de l'invention.

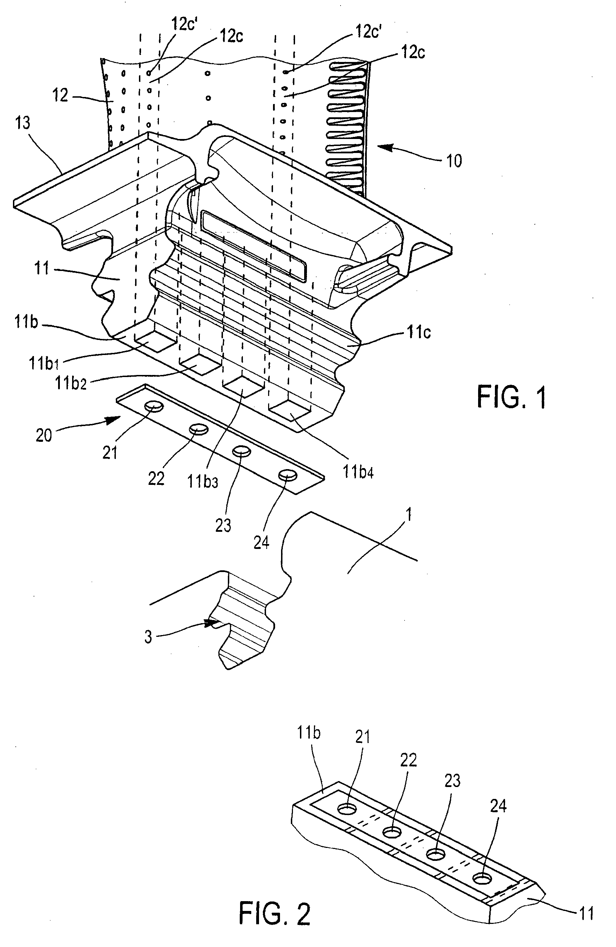

Un rotor de turbine haute pression, axiale, comprend un disque 1 et une pluralité d'aubes 10 fixées radialement sur la jante de ce dernier. Les aubes comprennent un pied 11, une pale 12 et une plateforme 13 entre le pied et la pale 12. Les aubes sont logées par leur pied dans des alvéoles 3 axiaux, usinés dans la jante du disque 1. Le pied 11 et les flancs de l'alvéole sont conformés, ici à section dite en forme de sapin, de manière à retenir et assurer le maintien de l'aube dans son alvéole quand le disque est entraîné en rotation autour de son axe. La pale 12 de forme aérodynamique s'étend radialement sur la hauteur de la veine de gaz et la plateforme disposée transversalement par rapport à l'axe de l'aube forme un élément de paroi radialement intérieur de la veine. Pour assurer la tenue aux hautes températures du gaz moteur, l'aube est refroidie. L'aube est creuse avec une pluralité de cavités internes dans lesquelles circule l'air de refroidissement. Dans ce but et selon ce mode de réalisation, des entrées d'air sont prévues à la base de l'aube. Cette base est plane, perpendiculaire à l'axe de l'aube, de forme rectangulaire. La base 11b du pied 11 de l'aube comprend une pluralité d'ouvertures, ici 4, 11b1 à 11b4, communiquant avec des canaux internes 11c dans le pied 11. Les canaux se prolongent dans la pale 12 par des cavités 12c ménagées entre l'intrados et l'extrados de la pale et qui débouchent à l'extérieur à travers des perçages 12c'. L'aube est réalisée généralement selon la technique de fonderie à la cire perdue avec un usinage de finition. Afin de pouvoir ajuster le débit d'air alimentant les circuits de refroidissement de l'aube on dispose une plaquette de calibrage 20 sur la base 11b avec des orifices calibrés 21 à 24 en regard des ouvertures 11b1 à 11b4 de la base. Comme on le voit sur la figure 2 la plaquette est fixée par soudage sur le pied 11 contre la base 11b le long de son pourtour.

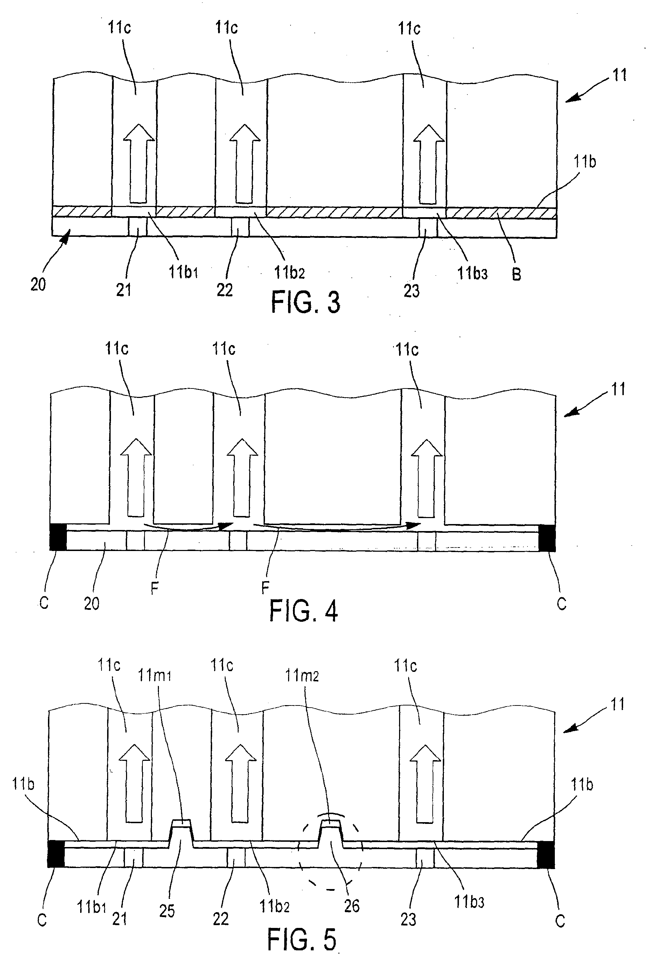

La figure 3 montre en coupe longitudinale la solution de l'art antérieur. La plaquette de calibrage 20 avec ses perçages 21, 22 et 23 est liée à la base 11b par l'intermédiaire d'un feuillard de brasage B. La brasure relie la plaquette à la base sur tout le pourtour ainsi que dans les zones entre les ouvertures 11b1, 11b2, 11b3. Par ce moyen, l'étanchéité est assurée pour l'air calibré entre les canaux 11c du pied.

Pour éviter les problèmes résultant du brasage de la plaquette, une soudure autogène à clin C en périphérie de la plaquette a été envisagée. Les zones entre les orifices seraient libres de soudure de manière à éviter les problèmes de criquage qui seraient susceptibles d'être créés par une soudure. On ne peut éviter alors les fuites inter cavités comme on le voit sur la figure 4. Les flèches F illustrent la circulation d'air calibré d'une cavité à l'autre. Cette circulation est à éviter.

La solution de l'invention consiste à créer des dispositifs d'étanchéité mécaniques inter cavités, représentés sur la figure 5. Une liaison à tenon et mortaise est réalisée entre la plaquette et la base du pied dans ces zones. Selon le mode de réalisation représenté la plaquette 20 comprend des tenons 25 et 26 entre les orifices calibrés 21 et 22 d'une part et 22 et 23 d'autre part. Ces tenons s'étendent transversalement d'un bord longitudinal à l'autre de la plaquette. La forme de sa section est ici trapézoïdale. Les tenons coopèrent avec des mortaises (11m1, 11m2) de forme complémentaire usinées dans la base 11b du pied 11. Les flancs des tenons sont en contact avec les flancs de la mortaise de manière à assurer l'étanchéité entre les canaux 11c.

La figure 5 montre la disposition préférée mais bien sûr les tenons et mortaises peuvent être inversés pour obtenir le même résultat.

De la même façon, les formes des surfaces en contact et assurant l'étanchéité peuvent varier. Les tenons par exemple peuvent être à section en arc de cercle.

Pour le montage de la plaquette, il suffit de fixer celle-ci sur la base 11b, de préférence par une soudure autogène à clin réalisée par le moyen, par exemple, d'un faisceau laser. D'autres moyens de chauffage sont envisageables. Dans le cadre de la solution, une liaison par brasage d'un feuillard ou autre est aussi possible. La liaison est assurée le long du pourtour de la plaquette seulement, l'espace entre les canaux 11c restant non lié. L'étanchéité entre les canaux 11c pour l'air calibré est assurée par les tenons engagés dans les mortaises.

## Revendications

1. Aube mobile de turbomachine comportant une pale (12) avec des cavités internes de refroidissement et un pied (11) par lequel l'aube peut être montée sur un disque de rotor, le pied comprenant au moins deux canaux (11c) communiquant avec lesdites cavités internes et débouchant sur sa base (11b), ladite base comprenant au moins deux ouvertures (11b1, 11b2) à travers lesquelles débouchent les canaux, une plaquette de calibrage (20) pourvue de perçages calibrés (21,22 ) correspondant auxdites ouvertures étant fixée sur la base (11b) du pied, **caractérisée par le fait qu'**un moyen mécanique (25, 26 ; 11ml, 11m2) formant barrière d'étanchéité entre les deux ouvertures est ménagé entre la plaquette et la base du pied, ledit moyen comprenant un tenon (25, 26) ménagé sur la plaquette ou la base du pied et une mortaise (11m1, 11m2) ménagée en vis-à-vis du tenon sur la base ou la plaquette, le tenon étant emboîté dans la mortaise.

2. Aube selon la revendication précédente dont au moins une face du tenon (25, 26) est en contact avec une paroi de la mortaise (11m1, 11m2) de manière à empêcher tout passage de gaz entre le tenon et la mortaise.

3. Aube selon l'une des revendications précédentes dont le tenon (25, 26) est à section trapézoïdale.

4. Aube selon l'une des revendications 1 à 2, dont le tenon est à section de forme arrondie.

5. Aube selon l'une des revendications précédentes dont la plaquette est fixée au pied de l'aube par soudure autogène.

6. Aube selon la revendication précédente dont la soudure est à clin sur le pourtour de la plaquette (20).

7. Aube selon l'une des revendications 1 à 4 dont la plaquette est fixée par brasage.

8. Aube selon l'une des revendications précédentes comprenant entre deux et six ouvertures sur la base, des moyens mécaniques d'étanchéité étant ménagés dans les zones de séparation entre les ouvertures.

## Patentansprüche

1. Eine mobile Turbinenschaufel einer Turbomaschine, umfassend ein Schaufelblatt (12) mit internen Kühl-Hohlräumen und einen Schaufelfuß (11), mit dem die Schaufel auf eine Rotorscheibe montiert werden kann, wobei der Schaufelfuß mindestens zwei Kanäle (11c), die mit den besagten internen Hohlräumen kommunizieren und an seiner Basis (11 b) münden, wobei besagte Basis mindestens zwei Öffnungen (11b1, 11b2) aufweist, durch welche die Kanäle einmünden, eine Kalibrierplatine (20) aufweist, die mit zwei kalibrierten Bohrungen (21, 22) bestückt ist, welche den besagten Öffnungen entsprechen und die an der Basis (11b) des Schaufelfußes befestigt ist, **dadurch gekennzeichnet, dass** ein mechanisches Mittel (25, 26; 11 m1, 11 m2) zwischen der Platine und der Basis des Fußes angeordnet ist und eine dichte Absperrung zwischen den beiden Öffnungen bildet, wobei besagtes Mittel einen auf der Platine oder an der Basis des Fußes angeordneten Zapfen (25, 26) sowie eine gegenüber dem Zapfen auf der Basis oder auf der Platine angeordnete Nut (11 m1, 11 m2) umfasst, wobei der Zapfen in der Nut steckt.

2. Turbinenschaufel gemäß dem vorstehenden Anspruch, wobei mindestens eine Seite des Zapfens (25, 26) mit einer Wand der Nut (11 m1, 11 m2) in Kontakt steht, um jegliches Durchfließen von Gas zwischen Zapfen und Nut zu verhindern.

3. Turbinenschaufel gemäß einem der vorstehenden Ansprüche, wobei der Zapfen (25,26) einen trapezförmigen Querschnitt aufweist.

4. Turbinenschaufel gemäß einem der vorstehenden Ansprüche 1 bis 2, wo der Zapfen einen Querschnitt mit einer abgerundeten Form aufweist.

5. Turbinenschaufel gemäß einem der vorstehenden Ansprüche, wobei die Platine durch Autogen-Schweißen auf dem Schaufelfuß befestigt ist.

6. Turbinenschaufel gemäß dem vorstehenden Anspruch, wobei die Schweißnaht eine auf der Platine (20) umlaufende Überlappnaht ist.

7. Turbinenschaufel gemäß einem der vorstehenden Ansprüche 1 bis 4, deren Platine durch Löten befestigt ist.

8. Turbinenschaufel gemäß einem der vorstehenden Ansprüche, die zwischen zwei und sechs Öffnungen an der Basis umfasst, wobei mechanische Dichtungsmittel in den Trennbereichen zwischen den Öffnungen angeordnet sind.

## Claims

1. Movable vane of a turbine engine comprising a blade (12) having inner cooling cavities and a root (11) by means of which the vane can be mounted on a rotor disc, the root comprising at least two channels (11c) communicating with said inner cavities and opening out on the base (11b), said base comprising at least two openings (11 b1, 11 b2) through which the channels open out, and a calibrating plate (20) provided with calibrated perforations (21, 22) corresponding to said openings being attached to the base (11b) of the root, **characterised in that** a mechanical means (25, 26; 11 m1, 11 m2) forming a sealing barrier between the two openings is arranged between the plate and the base of the root, said means comprising a tenon (25, 26) arranged on the plate or base of the root and a mortise (11 m1, 11 m2) arranged facing the tenon on the base or plate, the tenon being slotted into the mortise.

2. Vane according to the preceding claim, wherein at least one face of the tenon (25, 26) is in contact with the wall of the mortise (11 m 1, 11 m2) in such a way as to prevent any passage of gas between the tenon and the mortise.

3. Vane according to either of the preceding claims, wherein the tenon (25, 26) has a trapezoidal cross section.

4. Vane according to either claim 1 or claim 2, wherein the tenon has a rounded cross section.

5. Vane according to any of the preceding claims, wherein the plate is attached to the vane root by autogenous welding.

6. Vane according to the preceding claim, wherein the weld is a lap weld around the perimeter of the plate (20).

7. Vane according to any of claims 1 to 4, wherein the plate is attached by brazing.

8. Vane according to any of the preceding claims, comprising between two and six openings on the base, mechanical sealing means being arranged in the separation regions between the openings.
